(19) Europäisches Patentamt
European Patent Office
Office européen des brevets

(11) **EP 0 731 938 B1**

(12) **EUROPÄISCHE PATENTSCHRIFT**

(45) Veröffentlichungstag und Bekanntmachung des Hinweises auf die Patenterteilung:
**12.08.1998 Patentblatt 1998/33**

(21) Anmeldenummer: **95900624.8**

(22) Anmeldetag: **14.11.1994**

(51) Int Cl.⁶: **G05D 1/02**, G01C 25/00, G01C 22/02

(86) Internationale Anmeldenummer:
**PCT/DE94/01341**

(87) Internationale Veröffentlichungsnummer:
**WO 95/15519 (08.06.1995 Gazette 1995/24)**

(54) **SCHALTUNGSANORDNUNG ZUM AUSWERTEN DER SIGNALE EINES GIERGESCHWINDIGKEITSSENSORS**

CIRCUITRY FOR EVALUATING THE SIGNALS OF A YAW RATE SENSOR

CIRCUIT D'EVALUATION DES SIGNAUX EMIS PAR UN CAPTEUR DE VITESSE D'EMBARDEE

(84) Benannte Vertragsstaaten:
**DE FR GB IT**

(30) Priorität: **30.11.1993 DE 4340719**

(43) Veröffentlichungstag der Anmeldung:
**18.09.1996 Patentblatt 1996/38**

(73) Patentinhaber: **SIEMENS AKTIENGESELLSCHAFT
80333 München (DE)**

(72) Erfinder: **ULM, Michael
D-93087 Alteglofsheim (DE)**

(56) Entgegenhaltungen:
**WO-A-90/12698        DE-A- 3 346 434
DE-A- 3 919 347        US-A- 3 882 731**

**Beschreibung**

Die Erfindung betrifft eine Schaltungsanordnung nach dem Oberbegriff von Anspruch 1. Eine solche Anordnung kann z.B. in einer Gierregelung verwendet werden, mit der die Fahrstabilität eines Kraftfahrzeugs erhöht wird, z.B. bei falschen Fahrmanövern durch den Fahrer oder um einen Seitenwind zu kompensieren. Gierbewegungen sind Drehungen des Kraftfahrzeugs um seine Hochachse, d.h. um eine senkrecht zu der Fahrbahnoberfläche durch seinen Schwerpunkt verlaufende Achse.

Fahrzeugstellgrößen für eine Gierregelung können entweder ein asymmetrisches Bremsen des Fahrzeugs durch eine ausschließliche oder unterschiedlich starke Betätigung der Bremsen auf einer Seite des Kraftfahrzeugs oder eine Verstellung des Hinterachslenkwinkels bei einem Kraftfahrzeug mit Hinterradlenkung sein.

Bei einer bekannten Vorrichtung zur Regelung der Fahrzeugbewegung wird der Einfluß von destabilisierenden Kräften am Fahrzeug durch Messen eines aktuellen "Giergrades" festgestellt, ein erwünschter Giergrad ermittelt und mit dem aktuellen Giergrad verglichen, und gemäß dem Vergleichsergebnis die Bremsen betätigt, um das Fahrzeug stabil zu halten (DE 39 19 347 A1).

Die Giergeschwindigkeit (auch als Gierrate bezeichnet) wird mit einem Gier- oder Drehgeschwindigkeitssensor (auch Gierratensensor) gemessen und in ein elektrisches Signal umgesetzt. Die Güte des verwendeten Sensors bestimmt maßgeblich die Genauigkeit der Fahrstabilitätsregelung. Wirtschaftlich in Serie produzierte Giergeschwindigkeitssensoren, die in Kraftfahrzeugen verwendet werden können, basieren zum Beispiel auf dem Prinzip der Messung des Einflusses der Corioliskraft auf eine schwingende Keramikstruktur (Fox, C.H.J.: Vibrating Cylinder Gyro - Theory of Operation and Error Analysis. University of Stuttgart Gyro Symposium, September 1988) oder auf ein stimmgabelähnliches Bauteil (JEE, September 1990, Seiten 99 bis 104).

Das wesentliche technische Problem insbesondere kostengünstiger Sensoren liegt darin, daß die Kennlinienparameter (Steigung und Nullpunktsordinate) stark von der Temperatur abhängen und daß diese Temperaturabhängigkeit selbst bei in Serie gefertigten Sensoren stark von Sensor zu Sensor streut. Aus der Praxis ist es bekannt (DE-A-3 346 434), einen Temperatursensor vorzusehen und die Abhängigkeit des Sensorsignals von der Temperatur rechnerisch zu korrigieren.

Der Erfindung liegt die Aufgabe zugrunde, zusätzlich zu dem Einfluß der Temperatur auf das Sensorsignal die für den einzelnen Sensor spezifische Temperaturabhängigkeit der Kennlinienparameter auszugleichen.

Diese Aufgabe wird erfindungsgemäß durch die Schaltungsanordnung nach Anspruch 1 gelöst.

Zweckmäßige Weiterbildungen der Erfindung sind in den Unteransprüchen niedergelegt.

Ein Ausführungsbeispiel der Erfindung wird im folgenden anhand der Zeichnung erläutert. Es zeigen:

Figur 1    einen Giergeschwindigkeits-Regelkreis für ein Kraftfahrzeug,

Figur 2    Kennlinien von in diesem Regelkreis verwendeten Drehgeschwindigkeitssensoren,

Figur 3a und 3b    Beispiele für sensorspezifische, d. h. von Sensor zu Sensor streuende, Verläufe der relativen Steigungsänderung und des Offsetwertes über der Sensortemperatur,

Figur 4    ein Flußdiagramm von ersten Auswertemitteln des Regelkreises nach Figur 1 und

Figur 5    ein Flußdiagramm von zweiten, adaptiven Auswertemitteln des Regelkreises nach Figur 1.

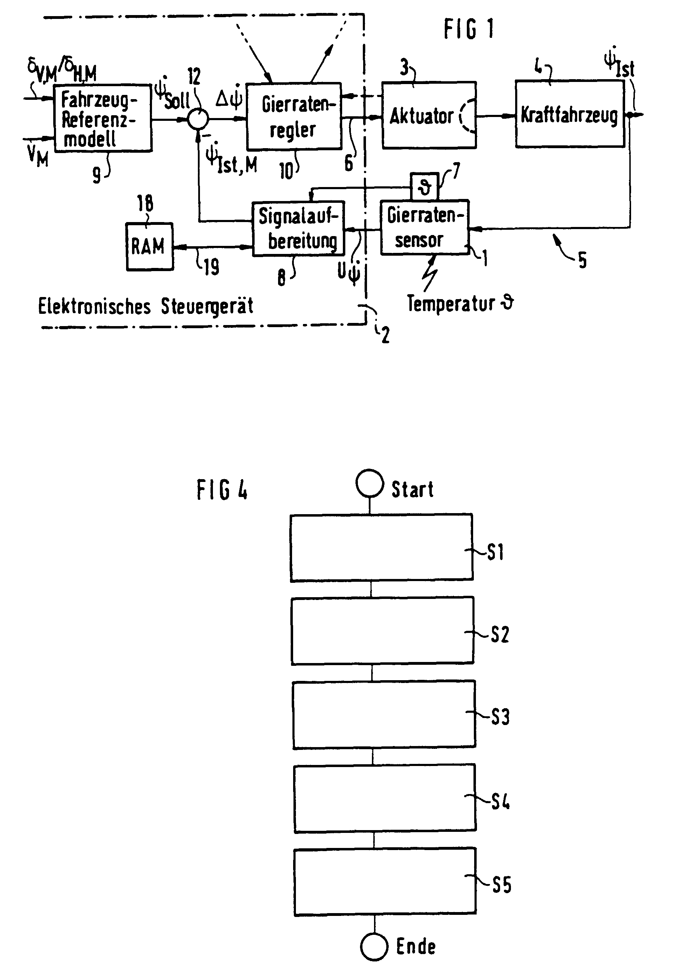

Ein Giergeschwindigkeits-Regelkreis (Figur 1) weist im wesentlichen folgende Bestandteile auf: einen Giergeschwindigkeitssensor 1, ein elektronisches Steuergerät 2, einen Aktor oder Actuator 3 und ein Kraftfahrzeug 4, dessen Giergeschwindigkeit von dem Sensor 1 gemessen wird. Der Aktor 3 empfängt über eine Signalleitung 6 Stellsignale des elektronischen Steuergeräts 2 und erzeugt daraufhin Giermomente, d.h. Drehmomente um die Hochachse des Kraftfahrzeugs 4. Dies kann wie erwähnt durch ein unterschiedlich starkes Bremsen auf der linken und auf der rechten Fahrzeugseite oder auch durch ein Lenken der Hinterachse des Kraftfahrzeugs 4 erfolgen. Der Giergeschwindigkeitssensor 1, der Aktor 3 und das Kraftfahrzeug 4 sind allgemein bekannt, sie sind deshalb in der Zeichnung nur als Blöcke dargestellt. Der Giergeschwindigkeitssensor ist mit einem Temperatursensor 7 versehen, der die Sensortemperatur an eine Signalaufbereitungsschaltung 8 des Steuergeräts 2 übermittelt.

Das Steuergerät 2 enthält außerdem eine Rechenschaltung 9 und einen Giergeschwindigkeitsregler 10. Die Signalaufbereitungsschaltung 8 verarbeitet das Ausgangssignal des Giergeschwindigkeitssensors 1 in noch zu beschreibender Weise. Ihr Ausgangssignal ist die gemessene Ist-Giergeschwindigkeit $\Psi_{Ist,M}$. Sie wird über den negierenden Eingang eines Vergleichers 12 auf den Eingang des Giergeschwindigkeitsreglers 10 rückgekoppelt. Auf den Plus-Eingang des Vergleichers 12 gelangt der Sollwert der Giergeschwindigkeit $\Psi_{Soll}$, der Ausgangssignal der Rechenschaltung 9 ist. In dieser werden, z.B. unter Zugrundelegen eines Fahrzeugs-Referenzmodells folgende Signale verarbeitet: der Vorderachslenkwinkel $\delta_{V,M}$ oder der Lenkradwinkel $\delta_{H,M}$ und die Fahrzeug-Referenzgeschwindigkeit $v_M$, d.h. die tatsächlich von dem Kraftfahrzeug gefahrene Geschwindigkeit.

Das Fahrwerk des Kraftfahrzeugs 4 setzt das durch den Aktor 3 zusätzlich aufgebrachte Giermoment in eine geänderte Ist-Giergeschwindigkeit (oder Gierrate) $\dot{\Psi}_{Ist}$ um, die von dem Giergeschwindigkeitssensor 1 gemessen und in ein entsprechendes elektrisches Signal $U_{\Psi}$ umgesetzt wird. Dieses vorzugsweise als elektrische Spannung ausgeführte elektrische Signal wird in dem elektronischen Steuergerät 2 aufbereitet und als gemessene Giergeschwindigkeit $\dot{\Psi}_{Ist,M}$ d.h. als ein den Giergeschwindigkeits-Istwert repräsentierendes steuergeräteinternes Signal, in dem Vergleicher 12 mit der Soll-Giergeschwindigkeit $\Psi^{*}_{Soll}$ verglichen. Die Differenz $\Delta\dot{\Psi}$ dieser beiden Werte gelangt als Regelabweichung zu dem Eingang des Giergeschwindigkeitsreglers 10. Dessen Ausgangssignal - z.B. ein elektrischer Strom - steuert den Aktor 3.

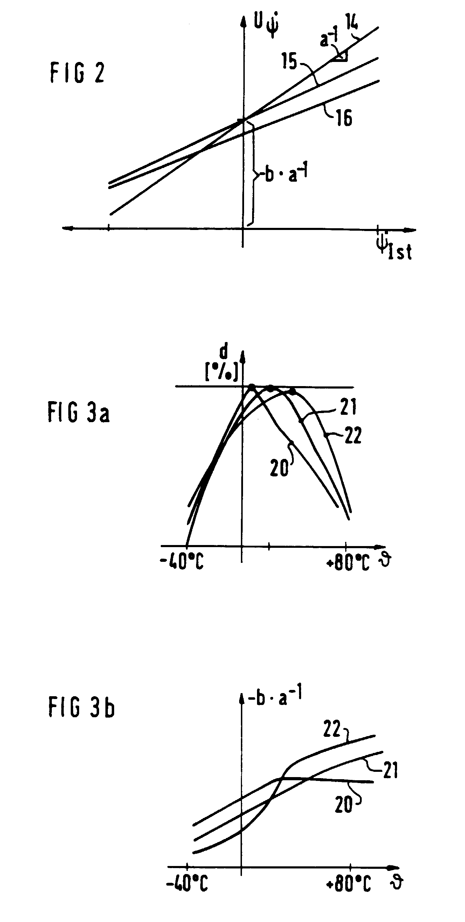

In Figur 2 sind Kennlinien von in diesem Regelkreis verwendeten handelsüblichen Drehgeschwindigkeitssensoren dargestellt. Eine Nominalkennlinie 14 weist eine Steigung $a^{-1}$ und einen Offsetwert $-b \cdot a^{-1}$ auf. Eine zweite Kennlinie 15 weist eine gegenüber der Nominalkennlinie 14 geänderte Steigung auf, und eine Kennlinie 16 weist eine gegenüber der Nominalkennlinie 14 geänderte Steigung und einen geänderten Offsetwert auf (Figur 3). Das elektrische Ausgangssignal des Sensors $U_{\Psi}$ ändert sich im wesentlichen linear mit der auf den Sensor wirkenden Giergeschwindigkeit. Die Kennlinie eines solchen Sensors läßt sich folglich durch folgende Formel beschreiben:

$$U_{\Psi} = a^{-1} * \dot{\Psi}_{Ist} - b * a^{-1} \qquad (I)$$

Hierin ist $a^{-1}$ die Steigung der Kennlinie und $-b \cdot a^{-1}$ ihre Nullpunktsordinate, d.h. der Ausgangswert des Sensors bei Giergeschwindigkeit null (auch als Offset-Wert bezeichnet). Diese Werte sind aber nicht konstant. Die wesentlichen technischen Probleme insbesondere kostengünstiger Giergeschwindigkeitssensoren für Kraftfahrzeuge bestehen zum einen darin, daß die Größen $a^{-1}$' und $-b \cdot a^{-1}$ stark von der Temperatur beeinflußt werden. Dies gilt insbesondere für sogenannte VSG-Sensoren (VSG = Vibrating Structure Gyros). Zum anderen streut der Verlauf der Größen a und b über der Temperatur selbst bei in Serie gefertigten Sensoren stark von Sensor zu Sensor.

Beispiele für die sensorabhängige Streuung der relativen Steigungsänderung $d$ der Kennlinie sind in der Figur 3a und Beispiele des streuenden Offsetwertes $-b \cdot a^{-1}$ der Kennlinie sind in der Figur 3b jeweils über der Sensortemperatur aufgetragen, und zwar für drei verschiedene Giergeschwindigkeitssensoren 20, 21 und 22. Die relative Steigungsänderung $d$ ergibt sich aus folgender Formel:

$$d = \frac{1}{a \cdot c} - 1 \qquad (II),$$

worin die Größe $c$ die eigentliche konstante nominelle Verstärkung des Sensors mit der Einheit Volt/(Grad/Sekunde) darstellt.

Die Streuungen unterworfene Temperaturabhängigkeit der Kenngrößen $a$ und $b$ des Giergeschwindigkeitssensors führt damit zu unmittelbaren Streuungen des aus dem Regelkreis nach Figur 1 resultierenden Fahrverhaltens. Dabei machen sich beispielsweise Offset-Fehler des Sensors in dem scheinbaren Vorhandensein von Seitenwind bemerkbar.

Bei bisherigen Giergeschwindigkeitssensoren ist es aus der Praxis bekannt, die Sensortemperatur zu erfassen und die Abhängigkeit der Kennliniensteigung $a^{-1}$' und des Kennlinien-Offsets $-b \cdot a^{-1}$ durch eine Nominalkennlinie abzubilden. Hiermit ist zwar eine Temperaturkompensation der Kennlinieneigenschaften für einen Normalsensor möglich, die sensorbedingte Streuung des Verlaufs von $a^{-1}$' und von $-b \cdot a^{-1}$ kann jedoch dabei nicht erfaßt werden.

Die genannten Probleme werden dadurch gelöst, daß die sensorabhängige Temperaturverteilung der Sensorkennliniensteigung $a^{-1}$ und des Sensor-Offsets $-b \cdot a^{-1}$ in der hier beschriebenen Auswerteschaltung durch zusätzliche Auswertungen von Sensorsignalen, insbesondere der Drehzahldifferenz der Räder einer nicht angetriebenen Achse, für den jeweiligen Giergeschwindigkeitssensor in dem Steuergerät adaptiert werden, d.h. in einer Art kontinuierlichem "Lernvorgang" verbessert werden. Dazu wird die Verarbeitung oder Auswertung der Signale des Giergeschwindigkeitssensors in zwei Bereiche oder gedankliche "Ebenen" aufgespalten:

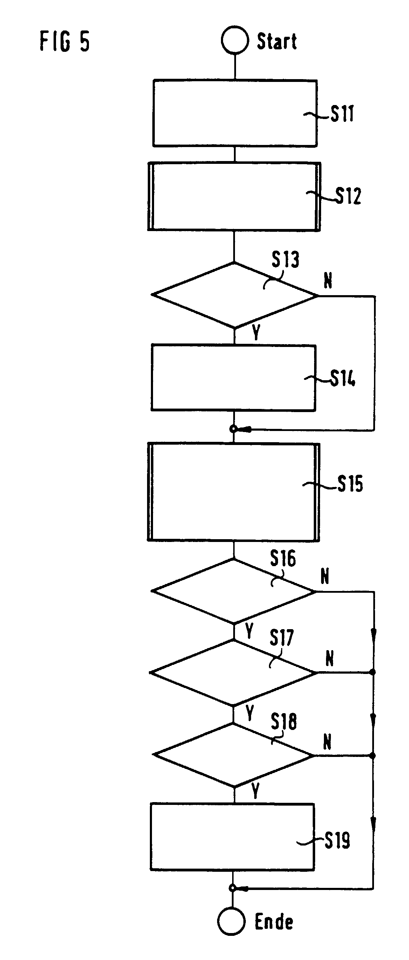

In einem sogenannten Regelzyklusbereich wird durch erste Auswertemittel in der Signalaufbereitungsschaltung 8 - entsprechend dem aus Figur 4 ersichtlichen Ablaufdiagramm eines Programmteils - ein steuergeräteinterner Meßwert für die Giergeschwindigkeit nach folgender Beziehung berechnet:

$$\dot{\Psi}_{Ist,M} = a_{M} * \dot{U}_{\Psi} + b_{M} \qquad (III)$$

Hierin sind:

$\dot{U}_{\Psi}$ ein gefilterter Wert des temperaturabhängigen Sensorsignals,

$a_{M}$ eine interpolierte temperaturabhängige Steigung der inversen Sensorsignal-Kennlinie und

$b_{M}$ ein interpolierter temperaturabhängiger Nullpunktwert der inversen Sensorsignal-Kennlinie.

Aufgabe dieser ersten Auswertemittel, die hier als Algorithmus realisiert sind, ist es, aus den elektrischen Signalen für die Giergeschwindigkeit und einem elektrischen Signal $U_\vartheta$ für die Temperatur des Sensorelements die aktuelle Fahrzeug-Giergeschwindigkeit $\dot\Psi_{ist,M}$ möglichst genau zu berechnen. Dazu wird das gefilterte Signal des Giergeschwindigkeitssensors 1 mit einem temperaturabhängig adaptierten Wert $a_M$ für die Kennliniensteigung multipliziert und danach um einen temperaturabhängig adaptierten Wert $b_M$ für den Kennlinienoffset ergänzt. Es empfiehlt sich, das Signal des Giergeschwindigkeitssensor nach einem der allgemein bekannten Verfahren zu filtern, um stochastische Schwankungen des Meßsignals und den sich daraus ergebenden störenden Einfluß auf den Regelkreis auszugleichen.

Die Werte $a_M$ und $b_M$ werden aus einem Schreib-/Lese-Speicher 18 des Steuergeräts 2 entnommen, der über eine Leitung 19 mit der Signalaufbereitungsschaltung 8 verbunden ist. In dem Speicher 14 sind diese Werte in Abhängigkeit von der Temperatur abgelegt. Der Speicher 15 muß auch beschrieben werden können, weil mit den weiter unten beschriebenen adaptiven Auswertemitteln die Tabellenwerte für $a_M$ und $b_M$ mit fortschreitendem "Lernerfolg" des Steuergerätes 2 immer wieder in den Arbeitsspeicher eingeschrieben werden müssen. Der Speicher 18 ist so ausgeführt, daß bei einem Abschalten der Spannungsversorgung des Steuergeräts 2 die eingeschriebenen Tabellenwerte erhalten bleiben, d.h. er ist entweder als batteriegepufferter RAM- oder als E$^2$PROM-Speicher ausgeführt.

Die erste Auswertung erfolgt innerhalb eines Zyklus des Regelkreises 5, indem der vorstehend beschriebene Algorithmus nach dem aus Figur 4 ersichtlichen Ablaufdiagramm abgearbeitet wird:

Nach dem Start werden in einem Schritt S1 die Signalspannung $U_\Psi$ des Giergeschwindigkeitssensors 1 und die Signalspannung $U_\vartheta$ des Temperatursensors 7 gemessen.

In einem Schritt S2 werden diese beiden Signalspannungen gefiltert und damit die gefilterten Werte $U^*_\Psi$ und $U_\vartheta^*$ gewonnen.

In einem Schritt S3 wird der zugehörige Wert $a_M$ aus den in der Tabelle des Speichers 18 abgelegten Werten $a_M(U^*\vartheta)$ interpoliert.

In einem Schritt S4 wird der zugehörige Wert $b_M$ aus der in dem Speicher abgelegten Tabelle der Werte $b_M(U^*\vartheta)$ interpoliert.

In einem Schritt S5 wird der Meßwert der Ist-Giergeschwindigkeit gemäß der Gleichung (III) einschließlich der beschriebenen Korrekturen berechnet. Damit ist das Ende des Teilprogramms erreicht.

Zweite Auswertemittel der Signalaufbereitungsschaltung 8 arbeiten in einer sogenannten Adaptionsebene, sie brauchen nicht reglerzyklussynchron zu verlaufen. Ihre Aufgabe ist es, die tatsächlichen, für den jeweiligen Sensor spezifischen Verläufe der Kennliniensteigung a und des Sensor-Offsets b in Abhängigkeit von der Temperatur des Giergeschwindigkeitssensors 1 zu ermitteln und die ermittelten Werte in die erwähnten Tabellen in dem Speicher 18 des Steuergeräts 2 zu speichern. Diese zweiten Auswertemittel führen somit eine Adaption - die auch als Identifikation bezeichnet wird - durch, die nun anhand des Ablauf- oder Flußdiagramms von Figur 5 erläutert wird:

Zu einem Abtastzeitpunkt k erfolgt der Start der Adaption der Kennlinienparameter a und b. Voraussetzung für die Ermittlung der tatsächlichen Werte a und b ist das Vorhandensein eines zumindest zeitweise gültigen Maßes der tatsächlichen Giergeschwindigkeit des Fahrzeugs. Diese tatsächliche Giergeschwindigkeit oder Gierrate wird als Referenzgiergeschwindigkeit $\dot\Psi_{ref}$ bezeichnet. Eine mindestens zeitweise plausible Information über die Referenzgiergeschwindigkeit ist durch die Drehzahlen der Räder einer nicht angetriebenen Achse des Kraftfahrzeugs gegeben. Diese Raddrehzahlen sind in der Regel - z.B. für eine ABS- oder eine ASR-Regelung - in dem Steuergerät 2 bereits vorhanden. Im folgenden bezeichnen $v_l$ und $v_r$ die Radgeschwindigkeiten des linken bzw. rechten Rades dieser nicht angetriebenen Achse.

In einem Schritt S11 werden die Radgeschwindigkeiten $v_l$ und $v_r$ gemessen. Um die Einflüsse von unterschiedlichen Reifenabrollumfängen auszugleichen, wird ein sogenannter Radabgleich nach einem der allgemein bekannten Verfahren durchgeführt.

In einem Schritt S12 wird die Referenzgiergeschwindigkeit $\dot\Psi_{ref}$ aus den gemessenen Raddrehzahlwerten $v_l$ und $v_r$ errechnet. Dies kann z.B. nach folgender einfacher Formel erfolgen:

$$\dot\Psi_{ref} = \frac{v_l - v_r}{l_{spurw}} \qquad (IV),$$

wobei $l_{spurw}$ den Abstand der beiden Radaufstandspunktzentren der Räder der nicht angetriebenen Achse bezeichnet.

Da diese Formel nur eine beschränkten Gültigkeitsbereich hat, wird in dem Schritt S12 zusätzlich ein Gültigkeitswert $G(\dot\Psi_{ref})$ mitberechnet, der ein kontinuierliches Maß für die Gültigkeit der berechneten Referenzgiergeschwindigkeit darstellt, z.B.:

$G(\dot\Psi_{ref}) = 0$ bedeutet: $\dot\Psi_{ref}$ ist vollständig nicht gültig
$G(\dot\Psi_{ref}) = 1$ bedeutet: $\dot\Psi_{ref}$ ist vollständig gültig

$G(\dot\Psi_{ref})$ ist abhängig von dem Fahrzustand des Kraftfahrzeug. So weist der nach der Gleichung (IV) berechnete Wert von $\dot\Psi_{ref}$ Fehler auf, wenn

- das Fahrzeug beschleunigt oder verzögert,
- gesteuerte Giervorgänge (z.B. Lenken der Hinterachse oder asymmetrisches Bremsen) gerade aktiv sind oder
- das Fahrzeug auf einer stark unebenen Fahrbahn fährt.

Die Berechnung von $G(\dot{\Psi}_{ref})$ muß daher diese fahrzustandsabhängigen Parameter verarbeiten. Hierzu ist besonders ein nach der Fuzzy-Logik arbeitendes Verfahren geeignet, und zwar mit folgender Regelbasis:

Regel 1:
Default: $G(\dot{\Psi}_{ref})$ = gültig

Regel 2:
If (Beschleunigung = nicht_klein) oder (Verzögerung = nicht_klein) dann $G(\dot{\Psi}_{ref})$ = nicht_gültig

Regel 3:
If (Hinterradlenkwinkel = nicht_klein) oder (asymmetrisches Bremsen) = aktiv)
dann $G(\dot{\Psi}_{ref})$ = nicht_gültig

Regel 4:
If (gefilterte Streuung von $v_l$ = groß ) oder (gefilterte Streuung von $v_r$ = groß) dann
$G(\dot{\Psi}_{ref})$ = nicht_gültig

Hierin bedeutet "Default", daß wenn alle anderen Regel nicht gültig sind, die vorliegende Folgerung wirksam wird.

Gefilterte Werte für die stochastisch streuenden Raddrehzahlsignale können z.B. durch eine bekannte PT1-Glättung des Betragswertes der zeitlichen Ableitung der Raddrehgeschwindigkeiten |v̇| gewonnen werden.

In einem Schritt S13 wird mit einem vorgegebenen Schrankenwert $\varepsilon(\dot{\Psi}_{ref})$ entschieden, ob tatsächlich der aktuell berechnete Wert $\Psi_{ref}$ sowie der aktuell gemessene und gefilterte Wert $U^{\cdot}_{\Psi}$ zur weiteren Identifikation von a und b herangezogen werden können. Ist

$$G(\dot{\Psi}_{ref}) > \varepsilon(\dot{\Psi}_{ref}),$$

dann werden in einem Schritt S14 die Werte $\dot{\Psi}_{ref}$ und $U^{\cdot}_{\Psi}$ in $\dot{\Psi}_{ref,gültig}$ bzw. $U^{\cdot}_{\Psi,gültig}$ umbenannt und für eine Identifikation in einem Schritt S15 als Eingangssignale bereitgestellt. Aus diesen Eingangssignalen werden die Parameter a und b identifiziert und es werden analog zu dem Schritt S13 zugehörige Gültigkeitswerte G(a) und G(b) berechnet. Die Berechnung wird wie folgt durchgeführt:

$$a = \frac{\dot{\Psi}_{ref,gültig(k+n)} - \dot{\Psi}_{ref,gültig(k)}}{U^{\cdot}_{\Psi,gültig(k+n)} - U^{\cdot}_{\Psi,gültig(k)}}$$

$$b = \dot{\Psi}_{ref,gültig(k+n)} - a \cdot U^{\cdot}_{\Psi,gültig(k+n)} ,$$

wobei k die Nummer des aktuellen Abtastzeitpunkts ist und n selbsttätig so angepaßt wird, daß

- eine numerisch günstig auszuwertende Differenz im Nenner der Formel für a entsteht und
- eigendynamische Vorgänge im Giergeschwindigkeitssensor selbst abgeschlossen sind.

Die Gültigkeitswerte G(a) und G(b) werden zweckmäßigerweise mit der folgenden Fuzzy-Regelbasis ermittelt:

Regel 1:
Default: G(a) = nicht_gültig
            G(b) = nicht_gültig

Regel 2:
If ($|U^*_\vartheta (k + n) - U^*_\vartheta (k)|$ = klein)und (INennerdifferenzl = groß) dann G(a) = gültig, G(b) = gültig

Die nachfolgenden Schritte S16, S17 und S18 dienen dazu, die Stützstellenwerte $a_M(U^*_\vartheta)$ sowie $b_M(U^*_\vartheta)$ nur dann durch die neuen identifizierten Werte a und b zu ersetzen (Schritt 19) wenn:

- die aktuelle Sensortemperatur $\vartheta$ sich tatsächlich "in der Nähe" eines Stützstellenwertes $\vartheta_i$ befindet (Schritt S15) <u>und</u>
- die Gültigkeitswerte G(a) und G(b) für die identifizierten Werte a und b größer als vorgegebene Schranken $\varepsilon(a)$ und $\varepsilon (b)$ (Schritt 17) sind <u>und</u>
- sich die neu identifizierten Werte a und b an der Stützstelle $\theta_i$ überhaupt von den bisher abgespeicherten Tabellenstützstellen $a_M(U^*_{\theta i})$ bzw. $b_M(U^*_{\theta i})$ deutlich unterscheiden (Schritt S18).

Der letztgenannte Schritt S18 ist deshalb von besonderer Bedeutung, da die neu identifizierten Stützstellenwerte bei einem Ausschalten der Zündung und damit der Versorgungsspannung für das Steuergerät in einem Speicher - z.B. in einem $E^2PROM$ - gesichert werden müssen. Speicherzellen eines solchen Speichers sind nur maximal 10 000 bis 100 000 mal beschreibbar.

Resümierend werden bei der Auswertung nach Figur 5 folgende Vorgänge abgearbeitet: In den Schritten S11 bis S14 werden die Referenzgiergeschwindigkeit und der zugehörige Istwert des Sensorsignals $U_\Psi$ bei der aktuellen Temperatur $\vartheta$ ermittelt. In dem Schritt S13 wird festgelegt, daß bei gültiger Referenzgiergeschwindigkeit die Werte übernommen werden. In dem Schritt S17 wird festgestellt, ob gültige Identifikationen für die Werte a und b vorliegen. In dem Schritt S18 wird festgestellt, ob Abweichungen der identifizierten Parameter *a* und *b* größer als vorgegebene Schwellen bezüglich der bisher gespeicherten Tabellenwerte sind. Falls ja werden *a* und *b* als neue Tabellenwerte übernommen. Damit ist das zu den zweite Auswertemitteln gehörende Programm an seinem Ende angelangt.

**Patentansprüche**

1. Schaltungsanordnung zum Auswerten der Signale eines Giergeschwindigkeitssensors in einem Regelkreis (5), insbesondere für eine Fahrstabilitätsregelung, in einem Kraftfahrzeug (4), mit einem Temperatursensor (7) zum Kompensieren der Temperaturabhängigkeit des Sensorsignals, **dadurch gekennzeichnet,** daß sie aufweist:

   - erste Auswertemittel, mit denen aus den elektrischen Signalen des Giergeschwindigkeitssensors (1) und des Temperatursensors (7) die augenblickliche Giergeschwindigkeit berechnet wird, und
   - zweite Auswertemittel, mit denen in Abhängigkeit von der Temperatur sensorspezifische Kennlinienparameter (a,b) des Giergeschwindigkeitssensors (1) adaptiv ermittelt werden; und
   - daß dabei eine aus gemessenen Raddrehzahlwerten $v_l$ und $v_r$ nach folgender Formel berechnete Referenzgiergeschwindigkeit ($\dot{\Psi}_{ref}$)

$$\dot{\Psi}_{ref} = \frac{v_l - v_r}{l_{spurw}}$$

   berücksichtigt wird, wobei $l_{spurw}$ den Abstand der beiden Radaufstandspunktzentren der Räder der nicht angetriebenen Achse bezeichnet.

2. Schaltungsanordnung nach Anspruch 1, dadurch gekennzeichnet, daß durch die ersten Auswertemittel innerhalb eines Regelzyklus ein Meßwert für die Giergeschwindigkeit nach folgender Beziehung berechnet wird:

$$\dot{\Psi}_{Ist.M} = a_M * U^{\bullet}{}_{\Psi} + b_M$$

   worin:

   $U^{\bullet}{}_{\Psi}$   ein gefilterter Wert des temperaturabhängigen Sensorsignals,
   $a_M$   eine interpolierte temperaturabhängige Steigung der inversen Sensorsignal-Kennlinie und
   $b_M$   ein interpolierter temperaturabhängiger Nullpunktwert der inversen Sensorsignal-Kennlinie

sind.

3. Schaltungsanordnung nach Anspruch 2, dadurch gekennzeichnet, daß ein Gültigkeitswert G($\dot{\Psi}_{ref}$) für die Referenzgiergeschwindigkeit ($\dot{\Psi}_{ref}$) mit einer Fuzzy-Regelbasis berechnet wird.

4. Schaltungsanordnung nach Anspruch 1, dadurch gekennzeichnet, daß das aufbereitete Ausgangssignal des Giergeschwindigkeitssensors (1) auf den Eingang eines Giergeschwindigkeitsreglers (10) rückgekoppelt wird.

5. Schaltungsanordnung nach Anspruch 1, dadurch gekennzeichnet, daß eine Referenz-Giergeschwindigkeit ($\dot{\Psi}_{ref}$) aus den gemessenen Raddrehzahlwerten einer nicht angetriebenen Kraftfahrzeugachse berechnet wird.

6. Schaltungsanordnung nach Anspruch 7, dadurch gekennzeichnet, daß gefilterte Werte für die stochastisch streuenden Raddrehzahlsignale durch Glättung des Betragswertes der zeitlichen Ableitung der Raddrehgeschwindigkeiten ($|\dot{v}|$) gewonnen werden.

**Claims**

1. Circuit arrangement for evaluation of the signals from a yaw rate sensor in a control loop (5), preferably for movement stability regulation in a motor vehicle (4), having a temperature sensor (7) for compensation of the temperature dependency of the sensor signal, characterized in that said circuit arrangement has:

   - first evaluation means using which the instantaneous yaw rate is calculated, from the electrical signals from the yaw rate sensor (1) and from the temperature sensor (7), and
   - second evaluation means using which sensorspecific characteristic parameters (a, b) of the yaw rate sensor (1) are determined adaptively as a function of the temperature; and
   - in that a reference yaw rate ($\dot{\Psi}_{ref}$) is calculated from measured wheel rotation speed values $v_l$ and $v_r$ in accordance with the following formula:

$$\dot{\Psi}_{ref} = \frac{v_l - v_r}{l_{trackw}}$$

   is taken into account, where $l_{trackw}$ designates the distance between the two centres of contact with the ground of the wheels on the non-driven axle.

**2.** Circuit arrangement according to Claim 1, characterized in that a measured value for the yaw rate is calculated by the first evaluation means within one control cycle in accordance with the following relationship:

$$\dot{\Psi}_{act,M} = a_M \cdot U^*_{\dot{\Psi}} + b_M$$

where:

$U^*_{\dot{\Psi}}$ is a filtered value of the temperature-dependent sensor signal,

$a_M$ is an interpolated temperature-dependent gradient of the inverse sensor signal characteristic and

$b_M$ is an interpolated temperature-dependent zero value of the inverse sensor signal characteristic.

**3.** Circuit arrangement according to Claim 2, characterized in that a validity value $G(\Psi_{ref})$ for the reference yaw rate ($\Psi_{ref}$) is calculated on a fuzzy logic basis.

**4.** Circuit arrangement according to Claim 1, characterized in that the conditioned output signal from the yaw rate sensor (1) is fed back to the input of a yaw rate regulator (10).

**5.** Circuit arrangement according to Claim 1, characterized in that a reference yaw rate ($\Psi_{ref}$) is calculated from the measured wheel rotation speed values of a non-driven motor vehicle axle.

**6.** Circuit arrangement according to Claim 5, characterized in that the filtered values for the randomly scattered wheel rotation speed signals are obtained by smoothing the magnitude of the time derivative of the wheel rotation speeds ($|\dot{v}|$).

**Revendications**

**1.** Circuit pour traiter les signaux d'un détecteur de vitesse de lacet dans un circuit de régulation (5), en particulier pour la régulation de la stabilité de circulation, dans un véhicule automobile (4), comportant un détecteur de température (7) pour compenser la dépendance du signal du détecteur en fonction de la température, caractérisé en ce qu'il comporte:

- des premiers moyens de traitement avec lesquels est calculée, à partir des signaux électriques du détecteur (1) de vitesse de lacet et du détecteur de température (7), la vitesse de lacet instantanée, et

- des deuxièmes moyens de traitement avec lesquels, en fonction de la température, des paramètres de courbes caractéristiques (a, b) spécifiques du détecteur (1) de vitesse de lacet sont déterminés de façon adaptative, et

- en ce que on considère une vitesse de lacet de référence ($\dot{\psi}_{ref}$), calculée à partir de valeurs mesurées de la vitesse de rotation des roues $v_l$ et $v_r$ suivant la formule suivante:

$$\dot{\Psi}_{ref} = \frac{v_l - v_r}{l_{spurw}}$$

où $l_{spurw}$ désigne la distance entre les deux centres des points d'appui des roues de l'essieu non entraîné.

**2.** Circuit suivant la revendication 1, caractérisé en ce que, par les premiers moyens de traitement, à l'intérieur d'un cycle de régulation, une valeur de mesure pour la vitesse de lacet est calculée conformément à l'équation ci-dessous:

$$\dot{\Psi}_{ist,M} = a_M . U^*_{\dot{\psi}} + b_M$$

où

$U_{\dot{\psi}}$ est une valeur filtrée du signal de détecteur fonction de la température,

$a_M$ est une pente interpolée, dépendant de la température, pour la courbe caractéristique inverse du signal de détecteur, et

$b_M$ est une valeur de point zéro, interpolée et dépendant de la température, de la courbe caractéristique inverse du signal de détecteur.

**3.** Circuit suivant la revendication 2, caractérisé en ce qu'une valeur de validité $G(\dot{\psi}_{ref})$ pour la vitesse de lacet de référence ($\dot{\psi}_{ref}$) est calculée avec une base de règles à logique floue.

**4.** Circuit suivant la revendication 1, caractérisé en ce que le signal de sortie traité du détecteur (1) de vitesse de lacet est réinjecté sur l'entrée d'un régulateur de la vitesse de lacet (10).

**5.** Circuit suivant la revendication 1, caractérisé en ce qu'une vitesse de lacet de référence ($\dot{\psi}_{ref}$) est calculée à partir des valeurs mesurées de vitesse de rotation des roues d'un essieu non entraîné du véhicule automobile.

**6.** Circuit suivant la revendication 5, caractérisé en ce que des valeurs filtrées, pour les signaux stochastiquement dispersés de vitesse de rotation des roues, sont obtenues par lissage de la valeur absolue de la dérivée dans le temps des vitesses de rotation des roues ($|\dot{v}|$).

FIG 1

$\delta_{VM}/\delta_{HM}$

Fahrzeug-Referenz-modell $\dot{\psi}_{Soll}$ 12 $\Delta\dot{\psi}$ Gierraten-regler Aktuator 3 Kraftfahrzeug $\dot{\psi}_{Ist}$

$V_M$

9 $\dot{\psi}_{Ist,M}$ 10 6

18 Signalauf-bereitung Gierraten-sensor $\vartheta$ 7

RAM 19 8 $U_{\dot{\psi}}$ 1 5

Elektronisches Steuergerät

Temperatur $\vartheta$

2

FIG 4

○ Start

S1

S2

S3

S4

S5

○ Ende

FIG 2

FIG 3a

FIG 3b

FIG 5